# EUROPÄISCHE PATENTSCHRIFT

(11) **EP 2 146 860 B1**
(45) Veröffentlichungstag und Bekanntmachung des Hinweises auf die Patenterteilung: **05.01.2011**
(21) Anmeldenummer: 08749686.5
(22) Anmeldetag: 24.04.2008
(51) Int. Cl.: B60K 23/08, B60K 17/16, B60K 17/346, F16H 1/28

(54) **ÜBERLAGERUNGSGETRIEBE ZUM VERTEILEN EINES ANTRIEBSMOMENTES AUF WENIGSTENS ZWEI ABTRIEBSWELLEN**
VARIABLE RATIO TRANSMISSION FOR DISTRIBUTING A DRIVE TORQUE TO AT LEAST TWO OUTPUT SHAFTS
TRANSMISSION SUPERPOSÉE PERMETTANT DE RÉPARTIR UN COUPLE MOTEUR SUR AU MOINS DEUX ARBRES SECONDAIRES

(30) Priorität: 19.05.2007 DE 102007023462
(43) Veröffentlichungstag der Anmeldung: 27.01.2010
(73) Patentinhaber: ZF Friedrichshafen AG, 88038 Friedrichshafen (DE)
(72) Erfinder: BAASCH, Detlef, 88048 Friedrichshafen (DE); PELCHEN, Christoph, 88069 Tettnang (DE); ROSEMEIER, Thomas, 88074 Meckenbeuren (DE)
(86) Internationale Anmeldenummer: PCT/EP2008/054965
(87) Internationale Veröffentlichungsnummer: WO 2008/141887

(56) Entgegenhaltungen:
- WO-A-2005/110790
- WO-A-2006/010186
- DE-A1- 10 319 684
- DE-A1- 10 348 960
- DE-A1-102005 007 650
- DE-A1-102006 022 175
- JP-A- 2001 039 179
- US-A- 5 387 161

## Beschreibung

Die vorliegende Erfindung bezieht sich auf ein Überlagerungsgetriebe zum Verteilen eines Antriebsmomentes auf wenigstens zwei Abtriebswellen gemäß dem Oberbegriff des Patentanspruchs 1.

Bei aus der Praxis bekannten Fahrzeugen wird ein von einer Antriebsquelle bzw. Antriebsmaschine erzeugtes Antriebsmoment bedarfsgerecht über eine Getriebevorrichtung zu den Antriebsrädern einer antreibbaren Fahrzeugachse geleitet. Sind Fahrzeuge, wie beispielsweise Allrad-Pkws oder allradgetriebene Lkws, mit mehreren angetriebenen Achsen ausgeführt, muss die Leistung der Antriebsmaschine im Antriebsstrang eines derartigen Fahrzeugs auf die einzelnen antreibbaren Fahrzeugachsen verteilt werden.

Dabei werden zur Leistungsverteilung Differentialgetriebe eingesetzt, welche einem Hauptgetriebe, das zur Darstellung verschiedener Übersetzungen vorgesehen ist, im Leistungspfad eines Antriebsstranges eines Fahrzeuges nachgeschaltet sind. Zur Längsverteilung der Antriebsleistung der Antriebsmaschine auf mehrere antreibbare Fahrzeugachsen eines Fahrzeuges werden Längsdifferentiale eingesetzt. Zusätzlich werden so genannte Querdifferentiale bzw. Ausgleichsgetriebe zu einer Querverteilung der Antriebsleistung zwischen zwei Antriebsrädern einer Fahrzeugachse eingesetzt.

Mit Hilfe derartiger Verteilergetriebe besteht die Möglichkeit, ein Antriebsmoment in beliebigen Verhältnissen auf mehrere Antriebsachsen zu verteilen, ohne Verspannungen in einem Antriebsstrang zu erzeugen. Des weiteren wird mit dem Einsatz von Ausgleichsgetrieben erreicht, dass Antriebsräder einer antreibbaren Fahrzeugachse mit unterschiedlichen Drehzahlen unabhängig voneinander entsprechend den verschiedenen Weglängen der linken bzw. rechten Fahrspur angetrieben werden können, wodurch das Antriebsmoment symmetrisch und somit giermomentenfrei auf beide Antriebsräder verteilbar ist.

Derartige Getriebe weisen jedoch den Nachteil auf, dass die auf die Fahrbahn übertragbaren Vortriebskräfte zweier Antriebsräder einer Fahrzeugachse bzw. zweier oder mehrerer Antriebsachsen aufgrund der Ausgleichstätigkeit eines Differentialgetriebes jeweils von dem geringeren bzw. geringsten übertragbaren Antriebsmoment der beiden Antriebsräder bzw. der antreibbaren Fahrzeugachsen abhängig ist. Das bedeutet, wenn ein beispielsweise auf Glatteis stehendes Antriebsrad durchdreht, wird dem anderen Antriebsrad kein höheres Moment als dem durchdrehenden Antriebsrad zugeführt, auch wenn es auf griffigem Untergrund steht. In einer solchen Fahrsituation kann das Fahrzeug aufgrund der Ausgleichstätigkeit eines Differentialgetriebes, welche eine Drehzahldifferenz zwischen zwei Abtriebswellen eines Differentialgetriebes ermöglicht, nicht anfahren.

- Aus der DE 103 48 959 A1 der Anmelderin ist eine Getriebevorrichtung zum Verteilen eines Antriebsmomentes auf wenigstens zwei Abtriebswellen mit mindestens zwei wenigstens dreiwelligen Planetensätzen bekannt, wobei die Planetensätze als Differential dienen. Dabei ist jeweils eine Welle eines Planetensatzes mit einer Antriebswelle verbunden und jeweils eine zweite Welle eines Plantetensatzes mit einer der Abtriebswellen. Darüber hinaus steht jeweils eine dritte Welle der Planetensätze derart mit einer Bremse in Wirkverbindung, dass ein Verteilungsgrad des Antriebsmomentes zwischen den beiden Abtriebswellen in Abhängigkeit der Übertragungsfähigkeiten der Bremsen variiert. Die DE 103 48 959 beschreibt zusätzlich ein Verfahren zum Steuern und Regeln der bekannten Getriebevorrichtung, bei dem zur Verteilung eines Antriebsmomentes einer Antriebsmaschine zwischen den beiden Abtriebswellen der Getriebevorrichtung die Übertragungsfähigkeiten der beiden Bremsen derart eingestellt werden, dass eine Bremse einen synchronen Zustand aufweist, und die Übertragungsfähigkeit der anderen Bremse zwischen einem unteren Grenzwert und einem oberen Grenzwert, der einem geschlossenen Zustand der Bremsen entspricht, variiert wird.

Die DE 103 48 960 A1 der Anmelderin beschreibt ebenfalls eine Getriebevorrichtung zum Verteilen eines Antriebsmomentes auf wenigstens zwei Abtriebswellen mit mindestens zwei wenigstens dreiwelligen Planetensätzen, wobei die Planetensätze als Differential dienen, und wobei jeweils eine Welle eines Planetensatzes mit einer Antriebswelle verbunden ist. Des weiteren stellt jeweils eine Welle eines Planetensatzes eine der Abtriebswellen dar, wobei jeweils wenigstens eine weitere Welle eines Planetensatzes mit einer Welle eines weiteren Planetensatzes wirkverbunden ist. Hierbei ist ein betriebszustandsabhängiges Moment einer Welle in Abhängigkeit eines Betriebszustandes der jeweils anderen damit wirkverbundenen Welle über die Wirkverbindung derart abstützbar, dass bei Auftreten eines Drehzahlunterschieds zwischen den Abtriebswellen über die Wirkverbindung ein den Drehzahlunterschied veränderndes Moment an den Planetensätzen anliegt.

Des weiteren ist aus der DE 697 10 033 T2 ein Differentialgetriebe bekannt, umfassend ein drehbares Bauteil auf der Eingangsseite zur Aufnahme einer externen Antriebskraft, zwei drehbare Bauteile auf der Ausgangsseite, die koaxial zu der Drehachse des eingangsseitigen drehbaren Bauteils angeordnet sind, ein Getriebegehäuse, in dem das eingangsseitige Bauteil und die ausgangsseitigen Bauteile frei drehbar gelagert sind, wobei eine Drehkraft des eingangsseitigen drehbaren Bauteils auf die ausgangsseitigen drehbaren Bauteile übertragen wird, während eine unterschiedliche Drehzahl zwischen den ausgangsseitigen drehbaren Bauteilen zugelassen wird.

Dieses Differentialgetriebe umfasst zudem ein erstes eingangsseitiges Zahnrad, das auf dem eingangsseitigen drehbaren Bauteil an dessen einem axialen Ende angebracht ist, welches zusammen mit dem eingangsseitigen drehbaren Bauteil drehbar ist, ein zweites eingangsseitiges Zahnrad, das an dem eingangsseitigen drehbaren Bauteil angebracht ist und zusammen mit diesem drehbar ist, ein erstes ausgangsseitiges Zahnrad mit einem Verzögerungsverhältnis, das größer oder kleiner in Bezug auf das erste eingangsseitige Zahnrad ist, wobei das erste ausgangsseitige Zahnrad zusammen mit den ausgangsseitigen drehbaren Bauteilen drehbar ist, ein zweites ausgangsseitiges Zahnrad mit einem Verzögerungsverhältnis, das kleiner oder größer in Bezug auf das zweite eingangsseitige Zahnrad ist, wenigstens ein Planetenrad, das mit dem ersten eingangsseitigen Zahnrad und dem ersten ausgangsseitigen Zahnrad kämmt und wenigstens ein zweites Planetenrad, das mit dem zweiten eingangsseitigen Zahnrad und dem zweiten ausgangsseitigen Zahnrad kämmt.

Bei dem Getriebe gemäß der DE 697 10 033 T2 ist das zweite eingangsseitige Zahnrad an dem eingangsseitigen drehbaren Bauteil an einem axialen Ende angeordnet, wobei das zweite ausgangsseitige Zahnrad koaxial drehbar mit einem der ausgangsseitigen drehbaren Bauteile ist. Des weiteren weist das Differentialgetriebe einen Träger auf, der das erste Planetenrad und das zweite Planetenrad so abstützt, dass sich diese um ihre eigenen Achsen drehen können und um die Drehachse des eingangsseitigen drehbaren Bauteils umlaufen.

Ferner ist eine erste Drehsteuerung zur Steuerung der Drehung des Trägers um die Drehachse des eingangsseitigen drehbaren Bauteils mit beliebiger Steuerkraft und eine zweite Drehsteuerung zur Steuerung der Drehung des zweiten ausgangsseitigen Zahnrades mit beliebiger Steuerkraft vorgesehen, wobei die Drehsteuerungen eine Anzahl von Reibplatten umfassen, die zusammen mit dem Träger oder dem zweiten ausgangsseitigen Zahnrad drehbar sind, sowie eine Anzahl von Reibplatten, die gemeinsam mit dem Gehäuse drehbar sind; ferner sind Druckmittel zum Zusammendrücken der Reibplatten mit beliebiger Druckkraft vorgesehen. Dieses bekannte Getriebe umfasst in nachteiliger Weise eine große Anzahl an Bauteilen; zudem sind die Herstellungs- und Montagekosten hoch.

Aus der DE 102006022175.3 der Anmelderin ist ein Überlagerungsgetriebe bekannt, umfassend zwei Planetensätze, die vorzugsweise koaxial zueinander hintereinander angeordnet sind und als Differential dienen, wobei die Planetensätze ein gemeinsames Hohlrad aufweisen, welches mit dem Antrieb verbunden ist, wobei die Stege der Planetensätze mit jeweils einer Abtriebswelle verbunden sind, und wobei ein Elektromotor vorgesehen ist, welcher mit dem Sonnenrädern der Planetensätze verbunden ist, durch dessen Ansteuerung die Momentenverschiebung zwischen den Abtrieben erfolgt.

Die DE 102005 007650A offenbart ein Überlagerungsgetriebe nach dem Oberbegriff des Anspruchs 1.

Der vorliegenden Erfindung liegt die Aufgabe zugrunde, ein Überlagerungsgetriebe zum Verteilen eines Antriebsmomentes auf wenigstens zwei Abtriebswellen anzugeben, welches ein herkömmliches Differential umfasst, einfach und kostengünstig aufgebaut ist und einen möglichst hohen Wirkungsgrad aufweist.

Diese Aufgabe wird durch-die Merkmale des Patentanspruchs 1 gelöst. Weitere erfindungsgemäße Ausgestaltungen und Vorteile gehen aus den Unteransprüchen hervor.

Demnach wird ein Überlagerungsgetriebe vorgeschlagen, umfassend ein herkömmliches Differential, welches einen Elektromotor zum Verteilen des Antriebsmomentes direkt zwischen den Abtriebswellen und einen als-Überlagerungseinheit dienenden Plusplanetensatz aufweist.

Gemäß der Erfindung wird neben einem konventionellen Differential als Überlagerungseinheit ein Plusplanetensatz angebracht. Hierbei ist das äußere Sonnenrad des Plusplanetensatzes mit dem Abtrieb der dem Planetensatz zugewandten Seite verbunden, wobei der Steg des Planetensatzes mit einem Elektromotor verbunden ist. Ferner ist das innere Sonnenrad des Planetensatzes über eine Vorgelegewelle mit der anderen Abtriebsseite verbunden.

Gemäß der Erfindung wird die Standgetriebeübersetzung des Planetensatzes durch den Übersetzungsfehler der Vorgelegewelle genau kompensiert, sodass der Elektromotor bei Geradeausfahrt steht.

Der Elektromotor kann gemäß der Erfindung als Außenläufer mit einem Hohlwellenstator oder als Innenläufer ausgeführt sein. Des weiteren kann zwischen beiden Abtrieben eine Übersetzung ins Langsame realisiert bzw. vorgesehen werden. Im Rahmen einer vorteilhaften Weiterbildung kann zudem am Elektromotor eine Übersetzungsstufe angeflanscht sein.

Durch die erfindungsgemäße Konzeption wird ein einfach und kostengünstig aufgebautes asymmetrisches Überlagerungsgetriebe zur Verfügung gestellt, welches einen guten Wirkungsgrad aufweist.

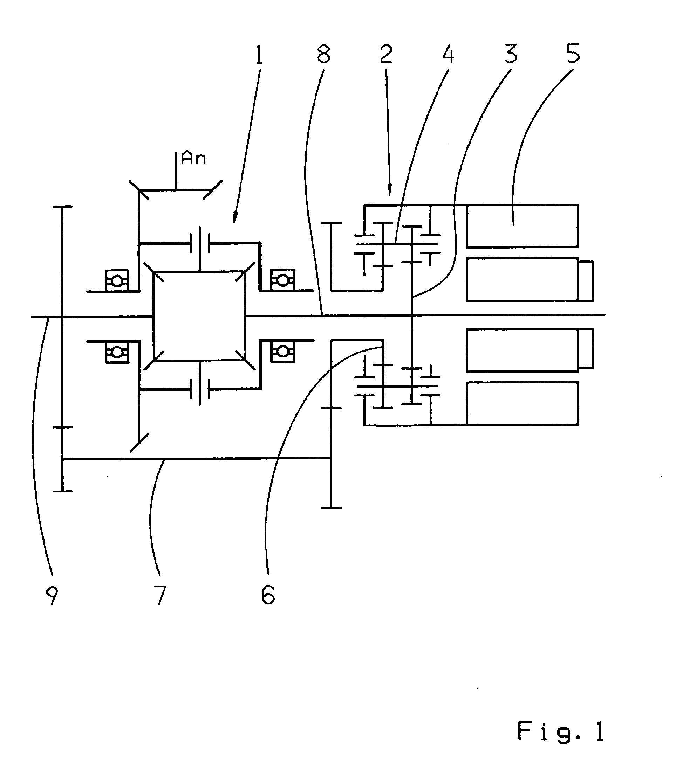

Die Erfindung wird im folgenden anhand der beigefügten Figur, welche eine schematische Ansicht einer bevorzugten Ausführungsform eines Überlagerungsgetriebes darstellt, beispielhaft näher erläutert.

In der Figur ist mit 1 ein herkömmliches Differential bezeichnet, welches durch den Antrieb An angetrieben wird. Neben dem Differential 1 koaxial zu einer Abtriebswelle 8 ist als Überlagerungseinheit ein Plusplanetensatz 2 angeordnet, wobei das äußere Sonnenrad 3 des Plusplanetensatzes 2 mit dem Abtrieb 8 der dem Planetensatz 2 zugewandten Seite des Differentials 1 verbunden ist und wobei der Steg 4 des Planetensatzes 2 mit einem Elektromotor 5 verbunden ist. Wie aus der Figur ersichtlich, ist das innere Sonnenrad 6 des Planetensatzes 2 über eine Vorgelegewelle 7 mit der anderen Abtriebswelle 9 verbunden. Bei dem gezeigten Ausführungsbeispiel ist der Elektromotor 5 als Außenläufer umfassend einen Hohlwellenstator ausgebildet.

Gemäß der Erfindung wird die Standgetriebeübersetzung des Planetensatzes 2 durch den Übersetzungsfehler der Vorgelegewelle 7 genau kompensiert, sodass der Elektromotor bei Geradeausfahrt in vorteilhafter Weise steht.

Bezugszeichen
- An: Antrieb des Differentials
- 1: Differential
- 2: Planetensatz
- 3: Sonnenrad
- 4: Steg
- 5: Elektromotor
- 6: Sonnenrad
- 7: Vorgelegewelle
- 8: Abtrieb
- 9: Abtrieb

## Patentansprüche

1. Überlagerungsgetriebe zum Verteilen eines Antriebsmomentes auf wenigstens zwei Abtriebswellen (8, 9), umfassend ein herkömmliches Differential (1), wobei es einen Elektromotor (5) zum Verteilen des Antriebsmomentes direkt zwischen den Abtriebswellen (8, 9) und einen als Überlagerungseinheit dienenden Plusplanetensatz (2) aufweist, wobei der Plusplanetensatz (2) koaxial zu einer Abtriebswelle (8) angeordnet ist, **dadurch gekennzeichnet, dass** das äußere Sonnenrad (3) des Plusplanetensatzes (2) mit dem Abtrieb (8) der dem Planetensatz (2) zugewandten Seite des Differentials (1) verbunden ist und der Steg (4) des Planetensatzes (2) mit dem Elektromotor (5) verbunden ist und wobei das innere Sonnenrad (6) des Planetensatzes (2) über eine Vorgelegewelle (7) mit der anderen Abtriebswelle (9) verbunden ist.

2. Überlagerungsgetriebe nach Anspruch 1, **dadurch gekennzeichnet, dass** der Elektromotor (5) als Außenläufer umfassend einen Hohlwellenstator ausgebildet ist.

3. Überlagerungsgetriebe nach Anspruch 1, **dadurch gekennzeichnet, dass** der Elektromotor (5) als Innenläufer ausgebildet ist.

4. Überlagerungsgetriebe nach Anspruch 1, 2 oder 3, **dadurch gekennzeichnet, dass** die Standgetriebeübersetzung des Planetensatzes (2) durch den Übersetzungsfehler der Vorgelegewelle (7) genau kompensiert wird, sodass der Elektromotor (5) bei Geradeausfahrt steht.

5. Überlagerungsgetriebe nach Anspruch 1, 2, 3 oder 4, **dadurch gekennzeichnet, dass** zwischen beiden Abtrieben (8, 9) eine Übersetzung ins Langsame vorgesehen ist.

6. Überlagerungsgetriebe nach einem der vorangehenden Ansprüche, **dadurch gekennzeichnet, dass** am Elektromotor (5) eine Übersetzungsstufe angeflanscht ist.

## Claims

1. Superposition gearing for distributing a drive torque to at least two drive output shafts (8, 9), comprising a conventional differential (1), with said superposition gearing having an electric motor (5) for distributing the drive torque directly between the drive output shafts (8, 9) and having a plus planetary gear set (2) which serves as a superposition unit, with the plus planetary gear set (2) being arranged coaxially with respect to a drive output shaft (8), **characterized in that** the outer sun gear (3) of the plus planetary gear set (2) is connected to the drive output (8) of that side of the differential (1) which faces towards the planetary gear set (2), and the web (4) of the planetary gear set (2) is connected to the electric motor (5), and with the inner sun gear (6) of the planetary gear set (2) being connected via a countershaft (7) to the other drive output shaft (9).

2. Superposition gearing according to Claim 1, **characterized in that** the electric motor (5) is designed as an external-rotor motor comprising a hollow-shaft stator.

3. Superposition gearing according to Claim 1, **characterized in that** the electric motor (5) is designed as an internal-rotor motor.

4. Superposition gearing according to Claim 1, 2 or 3, **characterized in that** the stationary gearing transmission ratio of the planetary gear set (2) is compensated exactly by the transmission error of the countershaft (7), such that the electric motor (5) is stationary during straight-line driving.

5. Superposition gearing according to Claim 1, 2, 3 or 4, **characterized in that** a step-down transmission ratio is provided between the two drive outputs (8, 9).

6. Superposition gearing according to one of the preceding claims, **characterized in that** a transmission ratio stage is flange-mounted on the electric motor (5).

## Revendications

1. Transmission superposée pour répartir un couple d'entraînement sur au moins deux arbres de prise de force (8, 9), comprenant un différentiel usuel (1), celui-ci présentant un moteur électrique (5) pour répartir le couple d'entraînement directement entre les arbres de prise de force (8, 9) et un train planétaire positif (2) servant d'unité de superposition, le train planétaire positif (2) étant disposé coaxialement à un arbre de prise de force (8), **caractérisée en ce que** la roue solaire extérieure (3) du train planétaire positif (2) est connectée à la prise de force (8) du côté du différentiel (1) tourné vers le train planétaire (2), et le porte-satellites (4) du train planétaire (2) est connecté au moteur électrique (5), et la roue solaire intérieure (6) du train planétaire (2) étant connectée à l'autre arbre de prise de force (9) par le biais d'un arbre intermédiaire (7).

2. Transmission superposée selon la revendication 1, **caractérisée en ce que** le moteur électrique (5) est réalisé sous forme de rotor extérieur comprenant un stator à arbre creux.

3. Transmission superposée selon la revendication 1, **caractérisée en ce que** le moteur électrique (5) est réalisé sous forme de rotor intérieur.

4. Transmission superposée selon la revendication 1, 2 ou 3, **caractérisée en ce que** la multiplication de transmission permanente du train planétaire (2) est exactement compensée par l'erreur de multiplication de l'arbre intermédiaire (7), de sorte que le moteur électrique (5) ne tourne pas en conduite en ligne droite.

5. Transmission superposée selon la revendication 1, 2, 3 ou 4, **caractérisée en ce qu'**une multiplication dans le sens d'un ralentissement est prévue entre les deux prises de force (8, 9).

6. Transmission superposée selon l'une quelconque des revendications précédentes, **caractérisée en ce qu'**un étage de multiplication est raccordé par bridage au moteur électrique (5).
